# FASCICULE DE BREVET EUROPEEN

(11) **EP 0 382 654 B1**
(45) Date de publication et mention de la délivrance du brevet: **25.08.1993**
(21) Numéro de dépôt: 90420057.3
(22) Date de dépôt: 02.02.1990
(51) Int. Cl.: A23B 7/02, A23B 4/033, A23B 7/08, A23L 1/314

(54) **Procédé pour améliorer le séchage naturel des produits biologiques, et produits biologiques ainsi traités**
Verfahren zur Verbesserung für die Naturtrocknung von biologischen Produkten und dadurch behandelte Produkte
Process for the natural drying of biological products, and such products so processed

(30) Priorité: 07.02.1989 FR 8901786
(43) Date de publication de la demande: 16.08.1990
(73) Titulaire: GATTEFOSSE S.A., 69800 Saint Priest (FR)
(72) Inventeur: Bousser, Robert, F-75116 Paris (FR)
(74) Mandataire: Laurent, Michel

(56) Documents cités:
- EP-A- 0 251 753
- AU-A- 523 911
- FR-A- 2 148 194
- FR-A- 2 214 418
- US-A- 3 931 434

## Description

L'invention concerne un procédé pour améliorer le séchage naturel des produits biologiques, végétaux notamment ; elle se rapporte également aux produits biologiques traités de la sorte.

Dans la suite de la description et dans les revendications, par "produits biologiques" on désigne tous produits vivants d'origine végétale ou animale. Ce peut être des plantes, des fruits, des légumes ou des produits très divers, tels que épices, thé, café, cacao, cacahuètes, mais aussi des plantes aromatiques ou médicinales. Si le plus généralement, l'invention est décrite dans son application relative au séchage des plantes, elle n'est nullement limitée à cette forme de réalisation. Dans une autre forme d'application, elle peut être utilisée pour le séchage des produits biologiques du règne animal, tels que par exemple les sérums, les organes, le placenta, les tissus, etc. .

Comme on le sait, pour essayer de conserver les propriétés actives des produits biologiques, on les sèche le plus souvent à l'air. Bien que largement répandue depuis l'origine des temps, cette technique présente toutefois de nombreux inconvénients, liés essentiellement à la lenteur de l'opération qui entraîne des dégradations, des décolorations et des désodorisations. Pour atténuer ces inconvénients, on recommande de récolter les plantes à sécher aussi peu mouillées que possible, de les sécher à l'abri de la lumière, en atmosphère aussi sèche que possible, et de les conserver dans des récipients étanches. Pour accélérer le phénomène de séchage, on a suggéré d'effectuer un apport de calories complémentaires, en particulier avec la technique de la déshydratation, ce qui malheureusement affecte généralement et irréversiblement les principes actifs fragiles et recherchés.

On a également proposé de soumettre ces produits à un "sulfitage préalable", c'est-à-dire à l'action d'un agent réducteur tel que l'anhydride sulfureux (SO2) ou de ses dérivés sulfites, métabisulfites, etc. . Pendant la première partie du séchage, on bloque de la sorte les phénomènes d'oxydation, mais les produits verts (chlorophylle), traités, ont souvent une fâcheuse tendance à jaunir. Par ailleurs, l'anhydride sulfureux s'élimine peu à peu, avec l'eau entraînée par le séchage, ce qui fait que son influence s'atténue et même disparait, autorisant à nouveau des dégradations possibles, y compris celles pouvant intervenir après séchage (surtout s'il n'est pas poussé).

Plus récemment, on a suggéré de faire appel à des techniques de lyophilisation ou d'atomisation qui donnent d'excellents résultats, mais restent encore trop coûteuses et surtout, n'évitent pas le défaut de désodorisation déjà signalé et qui est souvent rédhibitoire, pour les plantes aromatiques et parfois les plantes médicinales.

Bref, en l'état de la technique, les plantes séchées ne présentent pas les mêmes qualités et propriétés que les plantes fraiches.

Dans le document EP-A-0 251 753, on a décrit un procédé pour la fabrication de croustillants (crunchies) à base de pommes. Ce procédé consiste à couper des pommes en petites particules, puis à enrober ces particules d'une composition contenant de 2 à 100 % en poids de sucre cristallisable, à savoir du sucrose ou du fructose, mais également 40 % d'autres composés, tels que pectine, à étaler le mélange notamment à l'extrudeuse et enfin à le sécher, de sorte que le produit fini présente encore au moins 40 % de particules de pommes.

Dans le document FR-A-2 148 194, on a proposé un procédé de dessication des fruits par addition de dextrose anhydre à un jus de fruit concentré, puis malaxage de préférence à chaud (25 à 85° C), pour préparer une poudre qui ultérieurement, par addition d'eau, redonnera un jus de fruit.

Ces deux procédés ne visent pas à améliorer le séchage des fruits et ne permettent pas de leur conserver leurs propriétés initiales.

L'invention pallie ces inconvénients. Elle vise un procédé pour améliorer le séchage des produits biologiques, végétaux notamment, qui permet de conserver à ces produits toutes leurs propriétés initiales, tant sur le plan des principes actifs (alcaloïdes, oligo-éléments, vitamines, huiles essentielles, polyphénols, etc.), que gustatifs ou des couleurs (chlorophylle, anthocyanes, etc.).

L'invention vise également un procédé de séchage des plantes fraiches qui permet de conserver à ces plantes l'intégralité de leurs propriétés initiales.

Ce procédé pour améliorer le séchage des produits biologiques, dans lequel on mélange ces produits frais avec du dextrose, puis on sèche le mélange obtenu, se caractérise :
- en ce que la quantité de dextrose mélangé est de l'ordre de trois fois, à plus ou moins cinq pour cent (5 %) près, la quantité d'eau contenue dans le produit biologique à sécher ;
- en ce que le mélange du dextrose et du produit biologique frais est effectué, à température ambiante, par un broyage rapide par cisaillement, de manière à obtenir un mélange homogène ;
- et enfin, en ce que le séchage est effectué natuellement à une température comprise entre 25 et 30° C sous légère ventilation.

En d'autres termes, l'invention consiste à mélanger des produits biologiques frais à un agent desséchant, stabilisant et réducteur spécifique, à savoir le dextrose, intimement mélangé au produit biologique frais grâce à un broyage rapide et ce, à raison de trois fois la quantité d'eau contenue dans le produit à traiter. Ainsi, le dextrose reste présent dans le mélange pendant toute l'opération de séchage et même après celle-ci, ce qui permet de bloquer efficacement tous les phénomènes d'oxydation, ce que l'on ne pouvait pas obtenir jusqu'alors. En outre, l'étape de séchage naturel connu est effectuée sans aucun apport extérieur de calories, ce qui est économiquement important.

En d'autres termes, l'invention réside dans la sélection du dextrose comme agent réducteur et d'assèchement et ce, dans une proportion déterminée, à savoir de l'ordre de trois fois la quantité d'eau contenue dans le produit à traiter et dans le mode de mélange, à savoir par broyage rapide.

Le choix du dextrose améliore et confère d'autres propriétés au mélange.On peut citer:
- l'exaltion des saveurs et des aromes ;
- le goût agréable peu sucré ;
- la facilité de digestion du mélange ;
- la possibilité d'obtenir un produit bon marché compatible avec les exigences de l'industrie pharmaceutique, diététique en alimentaire ;
- et surtout, une amélioration des conditions de séchage, puisque l'apport de la masse sèche de dextrose donne au mélange une teneur en eau moindre que celle des produits de départ, et une texture moins compacte ; et, aussi, parce que cet apport autorise un séchage relativement peu poussé, grâce à la fonction réductrice et dépressive du dextrose, qui réduit au maximum l'activité de l'eau restante.

Le dosage préalable de la quantité d'eau contenue dans le produit biologique à traiter, s'effectue de manière classique, par exemple par dessication et pesée, etc. .

Il est essentiel que la quantité de dextrose introduite soit de l'ordre de trois fois la quantité d'eau contenue dans les produits à traiter. Par "de l'ordre de trois fois", il faut entendre trois fois, plus ou moins 5% (cinq pourcent), cette quantité pouvant effectivement varier dans ces limites selon que le produit de base est plus ou moins humide, plus ou moins compact et également en fonction de l'oxydabilité de ces produits biologiques. En pratique, on a toujours intérêt à être aussi près que possible de ce rapport de trois.

Ainsi, le procédé selon l'invention non seulement permet d'améliorer les conditions de séchage, mais aussi la conservation des propriétés actives, gustatives et pour l'essentiel odorantes des produits, et ce sans affecter les autres propriétés de ces produits.

Comme déjà dit, les produits de base doivent être frais. Avantageusement, ces produits sont traités de suite après avoir été récoltés (plantes) ou prélevés, c'est-à-dire au moment où leurs principes actifs sont aussi efficaces que possible. Dans le cas de plantes, on peut cependant utiliser des produits légèrement fanés, c'est-à-dire dont le taux d'humidité a été atténué par un léger fanage relativement rapide (en atmosphère sèche et fraiche, légèrement ventilée) sur des claies ou en bouquet suspendu. Pour les produits présentant une grande oxydabilité, lors du broyage caractéristique, on peut introduire dans le mélange quelques traces de métabisulfite ou de tout autre anti-oxydant équivalent.

Avantageusement on ajoute, au mélange, des agents stabilisateurs, tels que du chlorure de sodium, de l'acide citrique et du sorbitol.

Une composition préférée selon l'invention, comprend en poids :
. 95 % de dextrose
. 2,5 % de sorbitol
. 2 % de sel de sodium,
. 0,5 % d'acide citrique.

Par "broyage rapide", on désigne une action mécanique destinée à rompre les cellules pour obtenir un mélange homogène et intime, effectuée à température ambiante, et pendant une durée assez brève, c'est-à-dire de l'ordre seulement de quelques minutes, voire même d'une minute. Ce broyage rapide caractéristique s'effectue de manière connue par cisaillement rapide à température ambiante, notamment à l'aide de couteaux rotatifs. On peut, lors du broyage, intégrer dans le mélange une petite quantité de matière grasse, telle qu'une huile neutre, du saindoux, de la margarine, ce qui favorise la rétention des aromes. Ce broyage-hachage s'effectue comme déjà dit, avantageusement, rapidement, par cisaillement et à température ambiante, de manière à obtenir une espèce de hachis à allure de granulés humides.

Ces granulés sont alors répartis sur des plaques, par exemple en aluminium, préalablement saupoudrées d'amidon ou bien graissées ou huilées pour éviter tout collage, par exemple avec un triglycéride à chaine moyenne ; les plaques sont alors soumises à un séchage naturel, facilité éventuellement par une légère ventilation à température douce de l'ordre de 25 à 30°C. On peut, pen dant le séchage remuer doucement les granulés et l'on obtient assez rapidement des produits secs. Ces produits secs contiennent sensiblement tous les éléments actifs des produits biologiques de départ sans aucune dégradation, tant sur le plan gustatif, que de celui de l'odeur et des teneurs en principes actifs. En d'autres termes, le produit traité a conservé toutes ses propriétés dans leur intégralité qualitative, à l'exception bien évidemment de l'eau que l'on a volontairement éliminée et à tout le moins réduite. On peut également effectuer ce séchage des granulés humides dans un séchoir de type à lit fluidisé, mais à température réduite également de l'ordre de 25 à 30°C.

Dans une version pratique, le mélange de dextrose peut également contenir d'autres charges asséchantes, tel que par exemple de la poudre de lait, du chocolat, de la chapelure, du son. Ces charges viennent alors en déduction de l'apport de dextrose, sans toutefois en dépasser le tiers.

Les granulés secs obtenus peuvent alors être conditionnés tels que, dans des récipients étanches, de préférence opaques. Ils peuvent être également réduits en poudre ou être compactés en comprimés ou tablettes. Ces produits sont stables et faciles à doser enprincipes actifs. Ils sont facilement solubles, donc commodes à utiliser.

La manière dont l'invention peut être réalisée et les avantages qui en découlent ressortiront mieux des exemples de réalisation qui suivent.

### Exemple 1 - Préparation de granulés d'artichaut

Dans un broyeur semi-sphérique en acier inoxydable, équipé de couteaux, d'une contenance de dix litres, on introduit :
- 1000 (mille) grammes de feuille d'artichaut récoltées sur la tige, fraiches, lavées soigneusement et débarrassées de toute trace d'eau par essorage (teneur en eau : 85 %) ;
- 2550 (deux mille cinq cent cinquante) grammes d'un mélange comprenant :
   . 2423 g de dextrose (95 %),
   . 54 g de sorbitol (2,2 %),
   . 50 g de sel de sodium (2 %),
   . 13 g d'acide citrique (0,5 %).

On met ensuite en route le broyeur pendant une minute à 1200 tours. Après arrêt, on obtient un produit qui se présente sous la forme de granulés humides. On étale alors ces granulés sur des plaques d'aluminium disposées sur deux plateaux d'une étuve ventilée. Ces plateaux sont placés dans l'enceinte de l'étuve, et la ventilation est réglée au minimum (2000 m3/h d'air renouvelé). La température est réglée à 25°C.

Après six heures de séchage, on obtient des granulés secs, de couleur vert pale.

L'analyse de ces granulés donne une teneur en eau résiduelle de 9 %. Le dosage par la méthode d'ARNON des polyphénols totaux est de 1,4 % rapporté à la plante sèche. L'analyse met également en évidence le maintien des fonctions peroxydasiques par le réactif au paraphénylenediamine.

### Exemple 2 - Préparation d'une poudre de racine de Valériane

On opère comme à l'exemple 1.

On lave la racine de Valériane en plusieurs étapes, notamment après l'avoir brossée pour retirer la terre adhérente.

Dans le broyeur, on introduit :
- mille (1000) grammes de racines propres (teneur en eau : 80 %),
- deux mille quatre cent (2400) grammes du même mélange pulvérulent qu'à l'exemple 1.

On obtient un granulé sec que l'on place dans un broyeur pour le réduire en une poudre fine de 200 micromètres, de couleur marron clair, destinée à être utilisée ultérieurement sous forme de gélule.

Les analyses montrent une teneur en huiles essentielles de 0,87 % par rapport à la plante sèche.

### Exemple 3 - Préparation de granulés de passiflore

On procède comme aux exemples 1 et 2, mais à l'aide d'un broyeur en acier inoxydable à couteaux et racleurs de type STEPHAN, équipé d'un variateur de vitesse.

On introduit dans le broyeur à l'arrêt 4 kg de passiflore (tige et feuilles (teneur en eau : 91 %)) fraichement cueillies et 11kg du même mélange pulvérulent qu'à l'exemple 1 comprenant 10,45 kg de dextrose.

Le broyeur, une fois fermé, est mis en route pendant une minute à grande vitesse (4000 t/mn), et après un bref arrêt, une autre minute à 1000 t/mn.

Un peu moins de 15 kg de granulés humides sont recueillis par basculement du broyeur dans la cuve d'un sécheur à lit fluidisé de type GLATT ou AEROMATIC d'une capacité de cinquante litres.

Le séchage final pour obtenir 14 kg de produit sec dure trente minutes avec de l'air soufflé à 30°C.

Le granulé sec ainsi obtenu est de couleur vert, la teneur en humidité de 9 % et le dosage des flavonoïdes est de 6,80 % par rapport à la plante sèche.

Le procédé selon l'invention présente de nombreux avantages par rapport aux différents procédés de séchage des produits biologiques connus à ce jour. On peut citer :
- la facilité de mise en oeuvre, la simplicité et l'économie du procédé, d'autant que l'on opère à température ambiante ;
- l'excellente conservation des principes actifs des produits traités et de leurs propriétés initiale de fraicheur ;
- la stabilité et la facilité de stockage pendant plusieurs mois et plus de ces produits ;
- et une excellente préservation des couleurs.

De la sorte, ces produits biologiques, notamment les plantes peuvent recevoir de très larges applications, tels que produits alimentaires diététiques, produits pharmaceutiques pour l'homme ou l'animal, compléments alimentaires, etc.. Ils peuvent se présenter sous les formes les plus variées : galéniques, diététiques, telles que poudres, gélules, comprimés, plaquettes, etc.., seules ou en combinaison avec d'autres ingrédients, excipients, bases, etc. .

## Revendications

1. Procédé pour améliorer le séchage des produits biologiques, dans lequel on mélange des produits biologiques frais avec du dextrose, puis on sèche le mélange obtenu, caractérisé :
- en ce que la quantité de dextrose mélangé est de l'ordre de trois fois, à plus ou moins cinq pour cent (5 %) près, la quantité d'eau contenue dans le produit biologique à sécher ;
- en ce que le mélange du dextrose et du produit biologique frais est effectué, à température ambiante, par un broyage rapide par cisaillement, de manière à obtenir un mélange homogène ;
- et enfin, en ce que le séchage est effectué naturellement à une température comprise entre 25 et 30° C sous légère ventilation.

2. Procédé selon la revendication 1, caractérisé n ce que, lors du broyage, on introduit dans le mélange des traces de métabisulfite.

3. Procédé selon la revendication 1, caractérisé en ce que les produits biologiques frais sont traités de suite après avoir été récoltés (plantes) ou prélevés.

4. Procédé selon la revendication 1, caractérisé en ce que les produits biologiques sont des plantes légèrement fanées.

5. Procédé selon la revendication 1, caractérisé en ce que au dextrose, on ajoute du sel, de l'acide citrique et du sorbitol.

6. Procédé selon la revendication 1, caractérisé en ce que les produits biologiques frais à traiter sont des végétaux frais et en ce que ces végétaux sont broyés, à température ambiante, avec une composition comprenant en poids :
- 95 % de dextrose,
- 2,5 % de sorbitol,
- 2 % de sel de sodium,
- 0,5 % d'acide citrique.

7. Procédé selon la revendication 1, caractérisé en ce que le mélange humide obtenu après broyage rapide par cisaillement, est séché naturellement sur des plaques saupoudrées d'amidon ou graissées.

8. Produits biologiques frais mélangés à une composition de dextrose, obtenus par la mise en oeuvre du procédé selon l'une des revendications 1 à 8.

## Patentansprüche

1. Verfahren zur Verbesserung der Trocknung von biologischen Produkten, bei dem die frischen biologischen Produkte mit Dextrose vermischt werden und anschließend die erhaltene Mischung getrocknet wird, dadurch gekennzeichnet,
- daß die Menge an zugemischter Dextrose in der Größenordnung des Dreifachen, etwa 5 % der in dem zu trocknenden biologischen Produkt enthaltenen Wassermenge liegt;
- daß die Mischung an Dextrose und dem frischen biologischen Produkt bei Raumtemperatur durch ein rasches Zerkleinern durch Zerschneiden bewerkstelligt wird, und zwar derart, daß eine homogene Mischung erhalten wird;
- und daß schließlich die Trocknung natürlich bewerkstelligt wird, und zwar bei einer Temperatur zwischen 20 und 25° C unter leichter Belüftung.

2. Verfahren nach Anspruch 1, dadurch gekennzeichnet, daß beim Zerkleinern in die Mischung Spuren an Metabisulfit eingebracht werden.

3. Verfahren nach Anspruch 1, dadurch gekennzeichnet, daß die frischen biologischen Produkte sofort nachdem sie geerntet (Pflanzen) oder entnommen wurden, behandelt werden.

4. Verfahren nach Anspruch 1, dadurch gekennzeichnet, daß die biologischen Produkte leicht verwelkte Pflanzen sind.

5. Verfahren nach Anspruch 1, dadurch gekennzeichnet, daß der Dextrose Salz, Zitronensäure und Sorbitol hinzugefügt wird.

6. Verfahren nach Anspruch 1, dadurch gekennzeichnet, daß die zu behandelnden frischen biologischen Produkte frische Pflanzen sind, und daß diese Pflanzen bei Umgebungstemperatur zusammen mit einer Substanz zerkleinert werden, die folgendes in Gewichtsanteilen enthält:
- 95 % Dextrose,
- 2,5 % Sorbitol,
- 2 % Natriumsalz,
- 0,5 % Zitronensäure.

7. Verfahren nach Anspruch 1, dadurch gekennzeichnet, daß die feuchte Mischung, die nach dem raschen Zerkleinern durch Zerschneiden erhalten wird, auf natürliche Art und Weise auf mit Stärke bestreuten oder eingefetteten Platten getrocknet wird.

8. Frische biologische Produkte, vermischt mit einer Dextrose enthaltenen Substanz, erhalten durch Ausführen des Verfahrens nach einem der Ansprüche 1 bis 7.

## Claims

1. A process to improve the drying of biological products, by mixing said fresh biological products with dextrose and by drying the mixture obtained, **characterized** in that:
- the mixed quantity of dextrose is of the amount of three times, to plus or minus five percent (5 %), the water contained in these biological products to be dried ;
- the mixture of dextrose and of said fresh biological products is made, at room temperature, by a quick crushing action with shearing, in order to obtain an homogeneous mixture ;
- and then, the drying is naturally made at a temperature comprised between 25 and 30° C with a light ventilation.

2. A process according to claim 1, wherein traces of metabisulfite are added to the mixture during the crushing action.

3. A process according to claim 1, wherein the fresh biological products are processed immediately after the harvesting (plants) or picking.

4. A process according to claim 1, wherein the biological products are lightly faded plants.

5. A process according to claim 1, wherein salt, citric acid and sorbitol are added to dextrose.

6. A process according to claim 1, wherein the fresh biological products to be processed are fresh vegetables, and wherein those vegetables are crushed, at room temperature, with a composition comprising :
- 95 % dextrose,
- 2,5 % sorbitol,
- 2 % sodium salt,
- 0,5 % citric acid.

7. A process according to claim 1, wherein the wet mixture obtained after quick crushing with shearing is naturally dried on dusted with starch or lubricated plates.

8. Fresh biological products mixed with a dextrose composition obtained by the use of the process according to any claims 1 to 8.
